# EUROPEAN PATENT SPECIFICATION

(11) **EP 0 366 983 B1**
(45) Date of publication and mention of the grant of the patent: **22.12.1993**
(21) Application number: 89118892.2
(22) Date of filing: 11.10.1989
(51) Int. Cl.: F16J 9/00, F16J 9/20, F16J 1/00

(54) **Piston**
Kolben
Piston

(30) Priority: 04.11.1988 IT 6798788
(43) Date of publication of application: 09.05.1990
(73) Proprietor: Borgo-Nova SpA, I-10091 Alpignano Torino (IT)
(72) Inventor: Casellato, Rino, I-10129 Torino (IT)
(74) Representative: Hadfield, Robert Franklin

(56) References cited:
- EP-A- 0 069 175
- CH-A- 279 038
- IT-A- 1 187 975
- US-A- 3 926 166

## Description

The present invention relates to a piston, particularly though not exclusively, for an internal combustion engine.

It is common practice to provide in a piston for an internal combustion engine two upper piston rings which provide a gas sealing function to prevent gas blow-by past the piston and also a subsidiary oil sealing function. A third piston ring is also generally employed which provides an oil scraping function to remove surplus oil from the cylinder wall.

In Italian patent No. 1,187,975, of common ownership herewith, a piston is described having two conventional compression piston rings and an oil control groove wherein the oil control ring is omitted. Such a piston has been found to provide greatly reduced friction and an acceptable oil consumption. It has now been found that by modifying the two compression piston rings, and the empty groove, further improvements may be achieved, deriving from reduction of oil consumption, reducing sliding friction and fuel consumption.

The two upper compression piston rings generally have a face angle with the co-operating cylinder wall of about 1/2°, and there is described in US-A-3926166 a piston having a ring with a working face which co-operates with an associated cylinder wall, forming an angle of at least 1°30′ with the cylinder wall. This helps to provide an oil scraping capability in order to limit oil consumption in the engine.

According to the present invention a piston for an internal combustion engine includes two piston rings each having a working face which co-operates with an associated cylinder wall, and below the lower most piston ring groove, and spaced therefrom, an empty groove with associated oil drainage passages, characterised in that both generally radial side face walls of the groove form an angle of between ±1° and ±30° to a normal to the piston axis and that the working face of at least the lower piston ring forms an angle of at least 1° 30′ with the associated cylinder wall.

The generally radially directed side face walls need not be parallel. It has been found that by forming the open groove with an angle to the piston axis the oil scraped by the lower piston ring may be more easily and efficiently dispersed away from the cylinder wall.

The groove may have associated oil drainage passages such as holes or slots; the axis of such holes or slots themselves may be angled relative to the normal to the piston axis at an angle of between 1° and 5°.

The piston face adjacent the lower radial face of the open groove may be relieved by a chamfer or a rabbet, for example. This relief is believe to form an expansion chamber effect which encourages oil to flow into the open groove and be dispersed away from the cylinder wall.

In order that the present invention may be more fully understood, examples will now be described by way of illustration only with reference to the accompanying drawings, of which:
Figure 1 shows a section through the piston ring region of a piston and piston rings;
Figures 2 shows a piston ring of the first alternative cross sectional form to those in Figure 1;
Figure 3 shows a piston ring of a second alternative cross sectional form to those as shown in Figure 1;
Figure 4 shows, in greatly exaggerated form, the dishing which results from the piston ring cross sections of Figures 2 and 3; and
Figure 5 which shows an alternative form of open groove to that shown in Figure 1, which alternative form of open groove, in combination with piston rings as shown in Figures 1 to 4, is provided in a piston in accordance with the present invention.

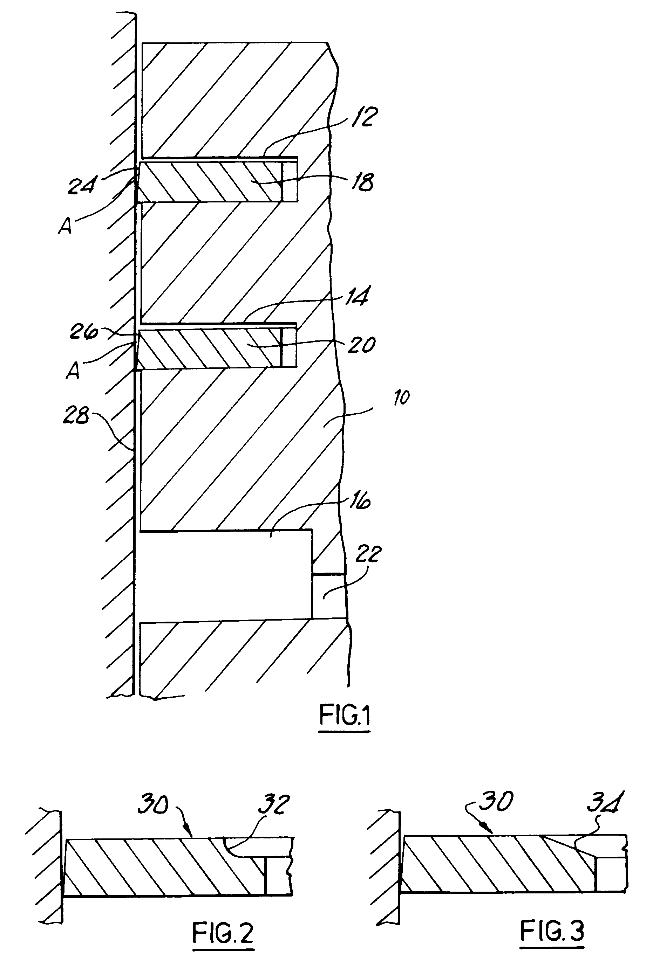

Referring now to Figure 1 and where a piston is denoted generally at 10. The piston comprises an upper ring groove 12, a second ring groove 14 and a lower empty groove 16. Received in the upper two grooves are piston rings 18 and 20 respectively. The lower groove 16 has a series of oil drainage passages 22 formed through the rear axial wall. The working faces 24 and 26 of the rings 18 and 20 and which co-operate with the associated cylinder wall 28 form an angle "A" of approximately 2° therewith.

In operation of the piston 10 against the cylinder wall 28 the rings 18 and 20 maintain line contact by virtue of the increased angle between the working faces 24 and 26 and the cylinder wall 28. Line contact improves the oil removal capability of the two rings and improves the gas sealing ability between the piston ring and the cylinder wall. The oil removed by the rings 18 and 20 drains down the piston/cylinder wall and is collected in the groove 16 and then passes out through the drainage channels 22 to return to the engine sump.

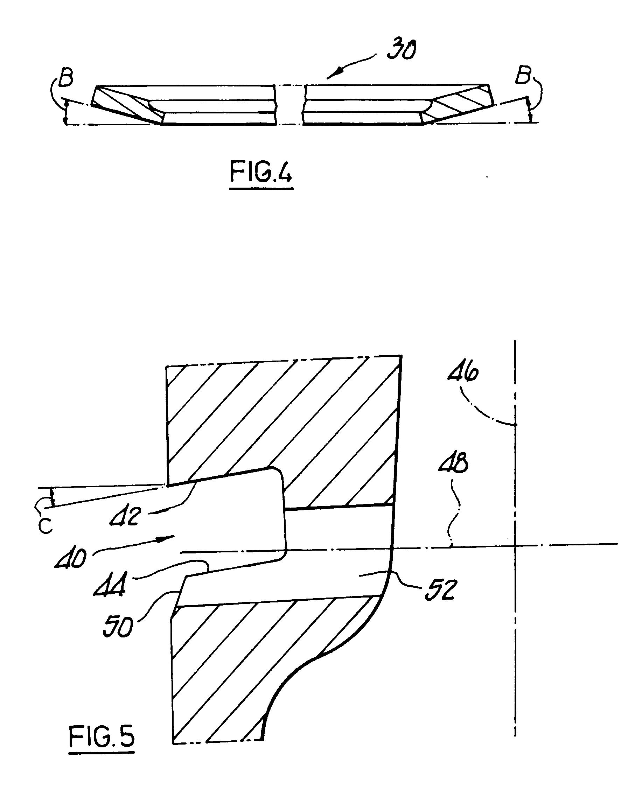

Referring now to Figures 2 and 3 and where piston rings are denoted at 30 the piston rings may be relieved on the top inner circumferential edge. In Figure 2 the relief is shown as a rabbet 32 and in Figure 3 as a chamfer 34. This causes the rings when in operation other than under the influence of combustion firing loads to adopt a slightly dished formation and which is shown greatly exaggerated in Figure 4 as angle B. The dishing aids stability of the ring by reducing flutter and enhances the oil scraping ability of the angled working face.

Figure 5 shows a modified form of lower open groove denoted generally at 40. The radial side face walls 42,44 of the groove as shown are angled in a downwardly direction relative to the piston axis 46, the angle C being negative between the groove and a normal to the axis 46.

The angle C may however, be between ±1° and ±30° to a normal to the piston axis 46. The oil drain passage 52 may be a series of circumferentially extending slots or a series of holes around the piston groove periphery. The axis 48 of the slots or holes 52 may itself be at an angle to a normal to the piston axis 46 the angle being between ±1° and ±5°. Adjacent the lower radial face 44 is a chamfer 50 on the piston circumferential face. The chamfer may be replaced by a rabbet or any other form of suitable edge relief. The effect of the chamfer or rabbet 50 appears to be that it forms an expansion chamber allowing oil to be more easily swept into the groove 40 during descent of the piston in the cylinder bore. The form of open groove shown in Figure 5, in combination with piston rings as shown in Figures 1 to 4, provides a piston in accordance with the present invention.

## Claims

1. A piston for an internal combustion engine, the piston including two piston rings (18,20) each having a working face which cooperates with an associated cylinder wall (28), and below the lower most piston ring groove (14), and spaced therefrom, an empty groove (40) with associated oil drainage passages (52), characterised in that both generally radial side face walls (42,44) of the groove (40) form an angle (C) of between ±1° and ±30° to a normal to the piston axis (46) and that the working face (24,26) of at least the lower piston ring (20) forms an angle (A) of at least 1° 30′ with the associated cylinder wall (28).

2. A piston according to Claim 1 characterised in that the axis (48) of the passages (52) form an angle with a normal to the piston axis (46) of between ±1° to ±5°.

3. A piston according to Claim 1 or Claim 2 characterised in that the axial piston face adjacent the lower radial face (44) of the groove (40) is relieved by a chamfer (50) or a rabbet.

## Patentansprüche

1. Kolben für eine Brennkraftmaschine, der zwei Kolbenringe (18,20) mit jeweils einer Arbeitsfläche, die mit einer zugeordneten Zylinderwand (28) zusammenwirkt, und unter der untersten Kolbenringnut (14) sowie mit Abstand von dieser eine Leernut (40) mit zugehörigen Ölablaufkanälen (52) aufweist, **dadurch gekennzeichnet**, daß beide allgemein radial verlaufenden Seitenflächenwände (42,44) der Nut (40) mit einer Senkrechten auf die Kolbenachse (46) einen Winkel (C) im Bereich von +/- 1° bis +/- 30° ausbilden, und daß die Arbeitsfläche (24,26) zumindest des unteren Kolbenrings (20) einen Winkel (A) von wenigstens 1° 30′ mit der zugeordneten Zylinderwand (28) einschließt.

2. Kolben nach Anspruch 1, dadurch gekennzeichnet, daß die Achsen (48) der Kanäle (52) mit einer Senkrechten zur Kolbenachse (46) einen Winkel im Bereich von +/- 1° bis +/- 5° einschließen.

3. Kolben nach Anspruch 1 oder Anspruch 2, dadurch gekennzeichnet, daß die axial verlaufende Kolbenfläche in der Nähe der unteren radial verlaufenden Fläche (44) der Nut (40) über eine Schräge (50) oder eine Nut zurückgesetzt wird.

## Revendications

1. Piston pour un moteur à combustion interne, piston comprenant deux segments (18,20) chacun présentant une face active qui coopère avec une paroi de cylindre associée (28), et en dessous de la gorge de segment de piston se trouvant le plus inférieur (14), et à l'écart de celle-ci, une gorge vide (40) avec des passages de drainage associés (52), caractérisé en ce que les deux parois latérales (42,44) en regard globalement radiales de la gorge (40) forment un angle compris entre ±1° et ±30° par rapport à la normale à l'axe du piston (46), et en ce que la face active (24,26) d'au moins le segment inférieur de piston (20) forme un angle (A) d'au moins 1°30′ avec la paroi de cylindre (28) associée.

2. Piston selon la revendication 1, caractérisé en ce que l'axe (48) des passages (52) forme un angle avec la normale à l'axe du piston (46) compris entre ±1° et ±5°

3. Piston selon la revendication 1 ou la revendication 2 caractérisé en ce que la face axiale du piston adjacente à la face radiale inférieure (44) de la gorge (40) est dégagée par un chanfrein (50) ou une feuillure.
